# EUROPEAN PATENT APPLICATION

(11) **EP 4 024 254 A1**
(43) Date of publication of application: **06.07.2022**
(21) Application number: 20306718.6
(22) Date of filing: 31.12.2020
(51) Int. Cl.: G06F 21/57, G06F 9/38, G06F 9/46, G06F 21/64, G06F 21/78

(54) **METHOD AND DEVICE FOR UPDATING DATA**

(71) Applicant: Idemia Identity & Security France, 92400 Courbevoie (FR)
(72) Inventor: KUMAR, Mrityunjay, 92400 COURBEVOIE (FR); SINGH AMRAWAT, Shyam, 92400 COURBEVOIE (FR)
(74) Representative: Santarelli

(57) **Abstract**

The present invention relates to a computing device comprising a non-volatile memory, referred to as first memory, and another memory referred to as second memory, the first memory storing a reference value relating to a content of the second memory, the second memory storing a current content identifier representative of current data of the second memory. The computing device may comprise a processing unit configured for updating data of the first memory and/or data of the second memory, and for setting an update flag of the second memory to a first flag value or to a second flag value, wherein the first flag value indicates that the data of the second memory has been updated, and the second flag value indicates that the reference value of the first memory has been updated.

## Description

### BACKGROUND OF THE INVENTION

The invention is in the field of security, in particular the security of systems on a chip. The invention relates, in particular, to a system on a chip and to methods for updating data in such system.

In a system on a chip, or SOC, the data handled by the secure operating system are generally at least partially stored in a rewritable non-volatile memory (NVM) external to the SOC (for instance a flash memory), and this for cost reasons. Also the SOC may include a secure element comprising a processing unit, a volatile memory, for instance a Random Access Memory (RAM), and a non-volatile memory of small size, typically a One Time Programmable (OTP) memory. The OTP memory is intended to be written only once: once a bit or a byte is written, it is irreversible. The SOC may also comprise other memories, for instance a Read-Only Memory (ROM).

One difficulty is that the external NVM may be shared with applications other than those of the secure element or the SOC. In addition, it can be handled independently of the secure element or the SOC, which therefore cannot control the use of the data it contains. This may raise problems in terms of security.

For example, data from the external memory can be recovered for later reuse for fraudulent purposes. For instance, the current value of a data may modified by reusing an old value of this data. Such an attack is known as a "downgrade attack" or a "rollback attack". By way of illustration, such an attack can allow a user to gain access to a paid service after the end of their subscription or to reset his electronic wallet to its maximum after emptying it.

There exist solutions to ensure the "freshness" of the data stored on the external memory, i.e. to ensure that it corresponds to the expected version at the time it is retrieved. For example, one solution consists in using a global version identifier of the current version of the entire data stored into the NVM (e.g. the external flash memory), this global version identifier being stored both in the NVM and in the OTP memory. In other words, this global version identifier reflects a current version of all data stored in the NVM. This global version can be, for instance, a hash value computed from the data of the NVM, or a MAC of the data. This global version identifier may be updated each time an operation is done on data (e.g. when all or part of the data is updated). When the data is retrieved, the global version identifiers stored in the two memories are compared to verify that they match. To update part of the data and the global version identifier, the data and the global version identifier may be copied from the external non-volatile memory to a Random-Access Memory (RAM) of the SOC, to be then updated within the RAM, and then in the external non-volatile memory. The global version identifier may further be updated in the OTP memory of the SOC.

For such solutions, it is necessary that the external non-volatile memory and the OTP memory are synchronized (i.e. the global version identifier stored in the two memories must match). In particular, if data of the NVM is updated, the global version identifier stored in the NVM must also be updated, and it is important to update the global version identifier stored in the OTP memory consequently. In other words, the external non-volatile memory and the OTP memory must be updated atomically: either the two memories are updated, or neither is. If the two memories are not synchronized, it can lead to system failures and security issues.

In the following, the global version identifier stored in the OTP memory is referred to as "OTP value" (in the description) or "reference value" (in the claims). Also, the global version identifier stored in the NVM is referred to as "NVM content value" (in the description) or "current content identifier" (in the claims). As detailed hereinafter, there may be several NVM content values stored in the NVM, each NVM content value being associated with a subset of objects to update.

However, ensuring the synchronization of both the external non-volatile memory and the OTP memory is not an easy task. In particular, in case of a power cut (or tearing), it may happen that the data are only updated in one of the memories but not in the other. For instance, in the above solution, in the event of a power failure immediately after updating the external non-volatile memory, the latter has been updated while the OTP memory has not.

The general algorithm for handling transactions in smart cards resets the updated value after detecting data corruption. It also restores updated data values to their previous values in case of tearing. However, this is not possible if an OTP memory is involved during the update.

A solution to ensure the synchronization between the memories would be to update the data that has not yet been updated based on the data that has already been updated (e.g. to update the global version identifier stored in the OTP memory if the global version identifier stored in the external NVM has been updated), but it can be very risky in terms of security if an attack has taken place and the data is compromised.

There is therefore a need for methods for updating data in both the external non-volatile memory and the OTP memory which ensure synchronization of these two memories, for instance in the event of a power cut.

Even if the invention is described in the particular context of an anti-rollback algorithm in a SOC, it can be used in any application requiring a synchronized update of data stored on two memories. As mentioned above, the invention is particularly advantageous when one of these memories is an OTP memory.

### SUMMARY OF THE INVENTION

The invention relates to a computing device comprising a non-volatile memory, referred to as first memory, and another memory referred to as second memory, the first memory storing a reference value relating to a content of the second memory, the second memory storing a current content identifier representative of current data of the second memory. The computing device may further comprise a processing unit configured for updating data of the second memory and/or for updating the reference value of the first memory, wherein said data of the second memory comprises the current content identifier, the second memory further comprising an update flag indicating whether the data of the second memory has been updated and/or the reference value of the first memory has been updated;
wherein the processing unit may be further configured for setting the update flag of the second memory to a first flag value or to a second flag value, wherein the first flag value indicates that the data of the second memory has been updated, and the second flag value indicates that the reference value of the first memory has been updated.

The "content of the second memory", refers to a set of data stored in the second memory. The "current content identifier" of the second memory is a value representative of data currently stored in the second memory, the term "current" referring to an actual value of data, for instance during an update of the second memory. This means that when some data of the second memory is changed as part of an update, the value of the current content identifier may also be changed based on the new data. The current content identifier may be computed for instance by applying a hash function to the data of the second memory, and any techniques making it possible to obtain a unique identifier of a set of data.

The "reference value" corresponds to a value stored in the first memory, and is called "OTP value" in the description. The reference value is associated with the content of the second memory at a given instant. For instance, at an initial state and if data of the second memory has not been corrupted, the reference value may be representative of the content of the second memory at this initial state. In this case, the reference value of the first memory is equal to the current content identifier of the second memory. If the data has been corrupted and corresponds, for example, to an earlier version of the content of the second memory (for example, an attacker accessed the second memory and replaced the current data with old data), the reference value may be representative of a later version of the content of the second memory. In that case, the reference value of the first memory is equal to a later version of the current content identifier of the second memory. Finally, when data of the second memory is updated, the current content identifier of the second memory is also updated, and, before any update of the first memory, the reference value corresponds to the content of the second memory before the update of said second memory. In that case, the reference value of the first memory is equal to a previous version of the current content identifier of the second memory.

In other words, the reference value identifies the content that the second memory should have, and therefore corresponds to an indicator of the freshness of the data of the second memory. Thus, when the content of the second memory is updated, the reference value of the first memory must also be updated to reflect the new content of the second memory.

It is noted that, as detailed hereinafter, the second memory may store one or several tables (typically databases, objects, data structures or array associating objects stored in the second memory with identifiers of their respective current versions). Each of these tables may store the current content identifier, which must be updated in each of the tables when at least one object of the second memory is updated.

The first memory is typically a non-reversible memory. The second memory is typically a reversible non-volatile memory (for instance EEPROM, for Erasable Electrically Programmable Read Only Memory, or Flash memory).

The update flag, called "OTP flag" hereinafter, makes it possible to determine, in the event of a power failure, at which step an update of the first and the second memory has stopped, and therefore to restore data (i.e. complete the update, or return to a previous content).

As mentioned above, in one or several embodiments, the current content identifier of the second memory corresponds to a previous version, a current version or an updated version of the reference value of the first memory.

In one or several embodiments, the computing device may comprise a system on a chip, SOC, and the first memory may be internal to the SOC. The second memory may be a non-volatile memory external to the SOC.

In one or several embodiments, the computing device may comprise a secure element, and the first memory may be a secure memory comprised in the secure element. For instance, the first memory may be included in a UICC, an eUICC, a SIM or an eSIM. The second memory may be external to this secure element.

In one or several embodiments, the first memory may be a One Time Programmable, OTP, memory.

In one or several embodiments, the processing unit may be configured for performing, in that order:
updating the data of the second memory, including updating the current content identifier;
setting the update flag to the first flag value;
updating the reference value stored in the first memory; and
setting the update flag to the second flag value.

As mentioned above, the value of the update flag makes it possible to determine which data has already been updated. If the update flag is set to the first flag value, it means that the data of the second memory has been updated, but not the reference value. If the value of the update flag is set to the second flag value, it indicates that the two memories are synchronized. Therefore, if an update could not be completely performed (e.g. in case of power cut), it is possible, based on the value of the update flag, to complete the update or to revert to the data of the first memory before the start of the update.

Accordingly, in one or several embodiments, the processing unit may be configured for, upon determining that a data update is not complete:
determining, based on the value of the update flag, whether data of the second memory has been updated and whether the reference value of the first memory has been updated;
upon said determining, performing one of:
   keeping the updated data of the second memory and the updated reference value of the first memory,
   updating the data of the second memory according to the reference value of the first memory, and
   updating the reference value of the first memory according to the updated data of the second memory

Another aspect of the invention relates to a method for updating data. The method may be performed by a processing unit of a computing device, wherein the computing device may comprise a non-volatile memory, referred to as first memory, and another memory referred to as second memory, the first memory storing a reference value relating to a content of the second memory, the second memory storing a current content identifier representative of current data of the second memory, the second memory further comprising an update flag indicating whether data of the second memory has been updated and/or the reference value of the first memory has been updated. The method may comprise:
updating the data of the second memory and/or updating the reference value of the first memory, wherein said data of the second memory comprises the current content identifier; and
setting the update flag of the second memory to a first flag value or to a second flag value, wherein the first flag value indicates that the data of the second memory has been updated, and the second flag value indicates that the reference value of the first memory has been updated.

In one or several embodiments, the method may comprise performing, in that order:
updating data stored in the second memory, including updating the current content identifier;
setting the update flag to the first flag value;
updating the reference value stored in the first memory; and
setting the update flag to the second flag value.

According to embodiments, the data of the second memory may comprise at least one table and a set of objects comprising at least one subset of objects, each of the at least one table being associated with one respective subset of objects among the at least one subset of objects and associating each object of said respective subset of objects to a respective version identifier, each of the at least one table further comprising a respective value of the current content identifier. The updating of the data of the second memory may comprise:
- updating an object of the set of objects; and
- for each table of the at least one table, updating the respective value of the current content identifier;
the update flag being set to the first flag value after updating the value of the current content identifier of each of the at least one table.

An "object" must be understood in the sense of computer science, and refers to any variable, data structure, or value stored in the second memory and usually referenced by a respective identifier. As mentioned above, in one or several embodiments, the second memory may store one or more tables, a table being for instance a database, an object, a data structure or an array associating one or several objects to a respective identifier of the version of said object.

Each table may further store the value of the current content identifier. When the update of the second memory is completed, the values of the current content identifier should be updated in all the tables.

As mentioned above, the respective value of the current content identifier of each of the at least one table may correspond to a previous version, a current version or an updated version of the reference value of the first memory.

In one or several embodiments, the updating of the data of the second memory comprises:
updating the version identifier associated with the updated object.

In one or several embodiments, the method may further comprise, before the updating of the object:
writing, in the second memory, a copy of the reference value of the first memory.

This copy is a backup version of the first memory, and may be used for reverting to the data of the first memory before the start of an update, if this update could not be completely performed (e.g. in case of power cut).

In one or several embodiments, the second memory may comprise a tag indicating a status of an update of data of the second memory, and the method may further comprise:
setting the tag of the second memory to a first tag value before the updating of the object;
setting the tag of the second memory to a second tag value after the updating of the object; and
setting the tag of the second memory to a third tag value after the setting of the flag to the second flag value.

This tag of the second memory, referred to as "transaction tag" may be used to determine whether an update of data of the first memory and/or the second memory has started but has not been completed.

In one or several embodiments, the method may comprise, upon determining that a data update is not complete, the data update comprising the updating of the data of the second memory and the updating of the reference value of the first memory:
determining, based on the value of the update flag, whether the data of the second memory has been updated and whether the reference value of the first memory has been updated;
upon said determining, performing one of:
   keeping the updated data of the second memory and the updated reference value of the first memory,
   updating the data of the second memory according to the reference value of the first memory, and
   updating the reference value of the first memory according to the updated data of the second memory.

In these embodiments, the data of the second memory may comprise at least one table and a set of objects comprising at least one subset of objects, each of the at least one table being associated with one respective subset of objects among the at least one subset of objects and associating each object of said respective subset of objects to a respective identifier, each of the at least one table further comprising a respective value of the current content identifier. The determining of whether the data of the second memory has been updated and whether the reference value of the first memory has been updated may comprise:
if the value of the update flag is equal to the first flag value:
   comparing the respective value of the current content identifier of one table among the at least one table with the reference value of the first memory;
      if the value of the current content identifier is equal to the reference value, setting the update flag to the second flag value and indicating that the data update is complete;
      if the value of the current content identifier is not equal to the reference value, updating the reference value of the first memory with said value of the current content identifier, setting the update flag to the second flag value and indicating that the data update is complete;
   if the value of the update flag is equal to the second flag value:
      comparing the respective value of the current content identifier of each table among the at least one table with the reference value of the first memory;
      if the value of the current content identifier of each table among the at least one table is equal to the reference value, indicating that the data update is complete; and
      if the value of the current content identifier of one table among the at least one table is not equal to the reference value, modifying a content of the second memory, including setting the current content identifier to said value of the reference value, so that this content is the same as before the data update.

In particular, when the content of the second memory is modified so that this content is the same as before the data update, the values of the current content identifier of all the tables are reset to the value of the reference value of the first memory.

This advantageously makes it possible, based on the value of the update flag, the reference value of the first memory and data of the second memory, to complete the update or to revert to the data of the first memory before the start of the update.

As mentioned above, the value of the current content identifier of each of the at least one table may respectively correspond to a previous version, a current version or an updated version of the reference value of the first memory.

In one or several embodiments, the method may further comprise:
writing, in the second memory, a copy of the reference value of the first memory before updating the data stored in the second memory and updating the reference value of the first memory;
wherein the modifying of the content of the second memory is based on the copy of the reference value.

In one or several embodiments, the determining that the data update is not complete may be performed upon detecting a power loss (e.g. after detecting a tearing).

In one or several embodiments, the determining that the data update is not complete may be based on a value of a tag of the second memory, said tag indicating a progress of an update of data of the second memory.

For example, the value of the tag may be one of a first tag value, a second tag value and a third tag value, wherein the first tag value indicates that a data update has not started, the second tag value indicates that the data update has started but is not completed, and the third tag value indicates that the data update is completed.

Yet another aspect of the invention relates to a non-transitory computer readable storage medium, having stored thereon a computer program comprising program instructions, the computer program being loadable into a data-processing unit and adapted to cause the data-processing unit to carry out the steps of one of the above methods when the computer program is run by the data-processing device.

Other features and advantages of the method and apparatus disclosed herein will become apparent from the following description of non-limiting embodiments, with reference to the appended drawings.

### BRIEF DESCRIPTION OF THE DRAWINGS

The present invention is illustrated by way of example, and not by way of limitation, in the figures of the accompanying drawings, in which like reference numerals refer to similar elements and in which:
- Figures 1a and 1b represent examples of architectures of an electronic device in which embodiments of the invention may be implemented;
- Figure 2 is a flow chart describing a data update in one or several embodiments of the invention;
- Figures 3a-3g represent steps of a method for updating data in one or several embodiments of the invention;
- Figure 4 is a flow chart describing a data restoration in one or several embodiments of the invention.

### DESCRIPTION OF PREFERRED EMBODIMENTS

Some situations require that the contents of two memories of an electronic device be synchronized, that is, the current versions of the data of the two memories must be the same. In other words, when some data of one of the memories is updated, data of the other memory must also be updated. However, in the event of a power cut while updating this data for instance, synchronization between these two memories may be lost. In the case where one of the memories is an OTP memory, such a state of desynchronization between the two memories can lead to failures because the modifications of the data of the OTP are irreversible. The invention proposes for this purpose a method for updating the contents of the two memories, in which a flag is used if certain data have already been updated in one and/or the other of the memories. In the event of a power loss, if a data update had started without being completed, the value of the flag makes it possible to determine which values have been updated, and which values may need to be modified. Therefore, the update may be completed or reverted.

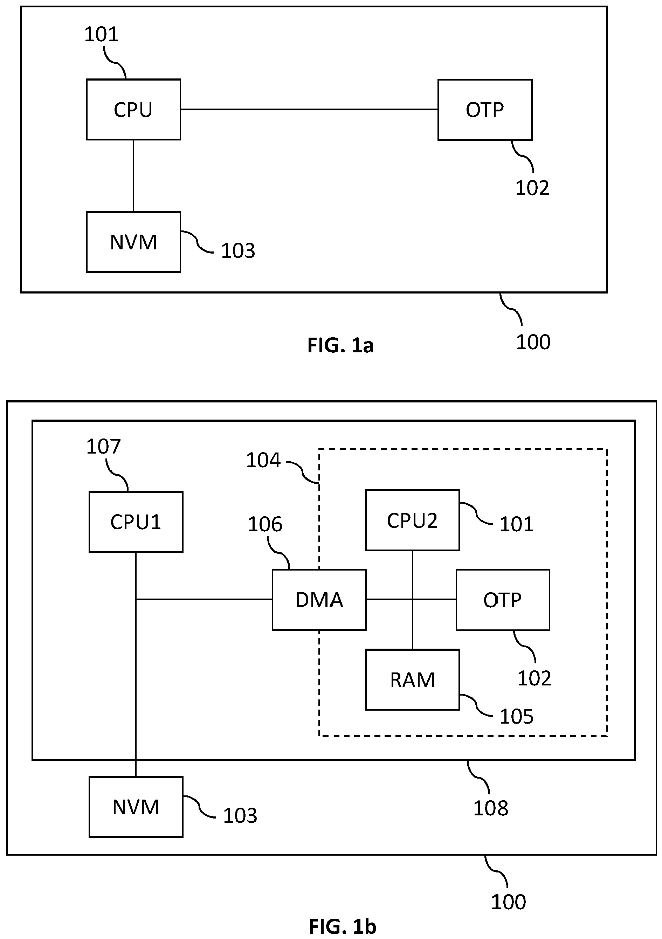

Figures 1a and 1b represent examples of architectures of an electronic device in which embodiments of the invention may be implemented.

The electronic device 100 may be any type of computer, such as a personal computer, a mobile data terminal or a mobile device, e.g. a smartphone, a tablet, a personal digital assistant, etc.

In the example of Figure 1a, the electronic device 100 comprises a processor (or Central Processing Unit, CPU) 101 connected to a rewritable NVM 103 and to a non-reversible memory (i.e. an OTP memory) 102. Subsequently, the word "connected" means "locally connected" as opposed to a remote connection with a server. This local connection may be, for instance, implemented using a bus. The rewritable NVM 103 may typically be mass storage such as a flash memory.

The NVM 103 may store program instructions loadable into the CPU 101 and adapted to cause the CPU 101 to carry out steps of the present invention when the program instructions are run by the CPU 101.

In the example of Figure 1b, the electronic device 100 comprises a system on a chip (SOC) 108 connected to a rewritable NVM 103. The NVM 103 is, in this example, external to the SOC 108. Other architectures are possible.

The rewritable NVM 103 may typically be mass storage such as a flash memory. This memory 103 may constitute a medium within the meaning of the invention, that is to say it may include a computer program comprising instructions for implementing a method according to the invention. The program may then be loaded into a Random Access Memory (RAM) 105 during the boot of the SOC 108.

In the example of Figure 1b, the SOC 108 comprises a first CPU 107 (CPU1) and a secure element (SE) 104. The first CPU 107 and the SE 104 may communicate for example via a communication interface 106, which may for example comprise a Direct Memory Access (DMA) module or a mailbox (not represented).

The secure element 104 comprises the following elements, which may be for example connected by a communication bus:
- a CPU 101 (CPU2) implementing a secure operating system (OS). According to embodiments, this CPU 101 may operate in secure mode only, or according to several modes (secure and not secure). According to embodiments, the CPU 101 of the SE may be configured to send instructions to the first CPU 107 or to a memory controller (on the SOC or connected to it) controlling the NVM 103;
- a non-volatile non-reversible memory 102, for example an OTP memory;
- a Random Access Memory (RAM) 105 which may comprise registers suitable for recording variables and parameters created and modified during the execution of the aforementioned program. During implementations of the invention, the program instruction codes stored in NVM 103 may be loaded into RAM 105 to be executed by the CPU 101 of the SOC 108; and
- a communication interface 106 adapted to transmit and receive data, for example to / from the rewritable NVM 103 via the first CPU 107.

As mentioned above, a communication bus may allow communication and interoperability between the various components 101, 102, 105 of the SE 108 or linked to it (e.g. the first CPU 107 and the NVM 103). The representation of the bus is not restrictive and, in particular, the CPU 101 of the SE may be configured to communicate instructions to any component 102, 105 of the SE 108 directly or through another component of this secure element.

It is noted that in this example of Figure 1b, the CPU 101 of the SE transmits its instructions to the first CPU 107, which transfers them to the NVM 103 via a communication bus. Alternatively, the first CPU 107 may be replaced by a memory controller external to the SOC 108, to which the CPU 101 of the SE may directly send its instructions / commands.

Typically, the OS of the CPU 101 of the SE may use objects as memory containers. In a known manner, an object is a block of bits comprising a header and data (payload). The header usually indicates the size of the data while the payload comprises information used either by an application running on the OS or by the OS itself. The OS may use these objects for its own needs, or for object-oriented applications using a virtual machine. The OS generally accesses the object by an address or an identifier which redirects to an address.

Of course, methods of the present invention may be carried out in electronic devices having other architectures. For instance, the device may comprise a secure element (UICC, SIM), an embedded secure element (eUICC, eSIM) or any secure subsystem comprising the OTP memory 102, and a NVM 103 external to this secure element / secure subsystem.

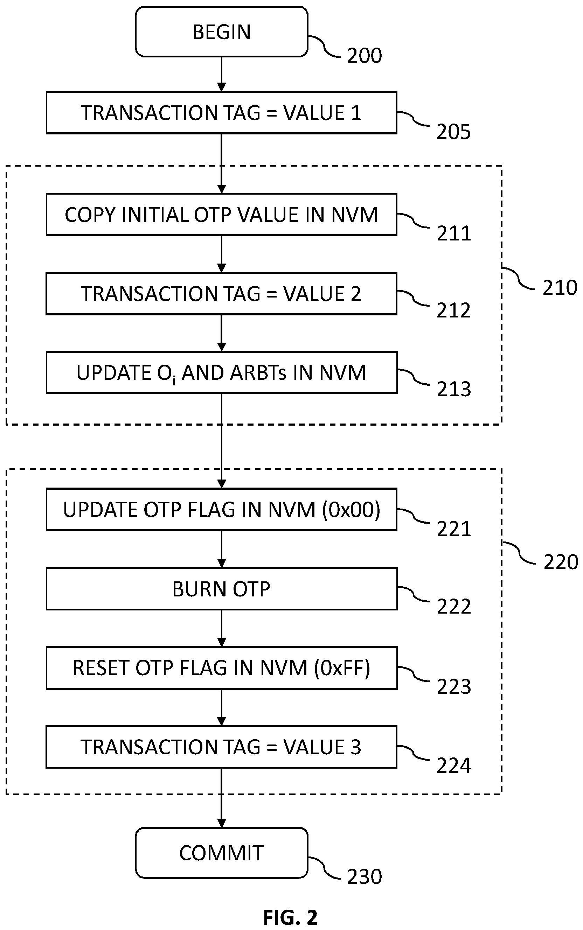

Figure 2 is a flow chart describing a data update in one or several embodiments of the invention. Part of this flow chart can represent steps of an example of a computer program which may be executed, for instance, by the CPU 101 of Figures 1a and 1b.

Before implementing any step of Figure 2, the OTP memory 102 may store a value called "current OTP value". Also, the NVM 103 may store at least one object, each object having a current version. Typically, the current OTP value may be representative of the current content (including the objects in their current versions) of the NVM 103. The NVM 103 may also store one or several tables, each of the tables being associated with a respective set of objects. Each table may comprise an identifier of the current version of each object of the set of objects with which the table is associated. For instance, the NVM 103 may store seven objects O₁, ..., O₇ and two tables T₁ and T₂. The first table T₁ may be associated with the set of objects O₁, O₂, ..., O₄ and the second table T₂ may be associated with the set of objects O₅, O₆, O₇. Therefore, the first table T₁ may comprise the identifiers of the respective current versions V(O₁), V(O₂), ..., V(O₄) of objects O₁, O₂, ..., O₄, and the second table T₂ may comprise the identifiers of the respective current versions V(O₅), V(O₆), V(O₇) of objects O₅, O₆, O₇.

According to the embodiments, the identifier of the current version of an object Oᵢ may be a version number, a signature, a checksum, a MAC, a hash or any value that uniquely identifies the version of the object Oᵢ. For example, the signature may be calculated based on the version number and the object data.

Each table of the NVM 103 may also comprise an identifier, called "NVM content value" of the current global content of the NVM 103. This identifier may be, according to embodiments, a version number, a signature, a checksum, a MAC, a hash or any value computed from the current content of the NVM 103. Before updating data in the NVM 103, and if no fraudulent modification of the data has taken place, the NVM content values are the same for all the tables, and are equal to the OTP value stored in the OTP memory 102.

Alternatively, only one NVM content value is stored in the NVM 103 (instead of one NVM content value per table), the NVM content value being representative of the current global content of the NVM 103.

In addition, the NVM 103 may comprise a flag called "OTP flag" to indicate whether at least one of the NVM content values of the NVM 103 and/or the OTP value of the OTP memory 102 have been updated, as detailed hereinafter. For instance, the OTP flag may have two possible values: a first value indicating that one of the two memories 102, 103 is updated but not the other one, and a second value indicating that the two memories 102, 103 are synchronized (either the update has not started for any of the memories, or the update is complete for both memories).

In one or several embodiments, the NVM 103 may also comprise a "rollforward zone" (not represented in the Figures) to guarantee the atomicity and security of updating the data of an object Oᵢ. The rollforward zone may include the data to be used to update a given object Oᵢ. In other words, this zone may include the latest (i.e. "freshest") version of the data.

At a first step 200, a transaction is started. It is recalled that a transaction corresponds to a series of operations, or instructions, which requires writing and / or updating data in the NVM 103. Therefore, in the following, the terms "transaction" and "data update" may be used interchangeably. In addition, it is recalled that a transaction has certain properties. In particular, a transaction is atomic, which means that the series of operations is indivisible: the transaction is either committed or aborted. When the transaction is aborted, all of the processed data should return to their initial state. In the field of telecommunications, the loading of a customer profile on an embedded subscriber identification module (eSIM) card generally includes a plurality of transactions, which can be either at the system level, or at the application level. Transactions are also used in other applications, such as making a payment from a secure element.

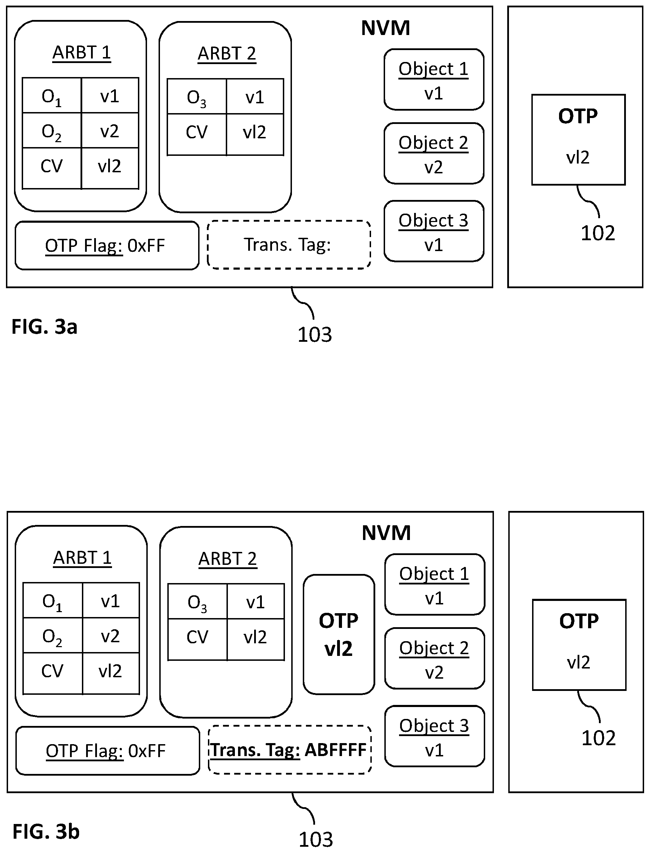

In one or several embodiments, the NVM 103 may comprise a tag called "transaction tag". The transaction tag may be used to indicate the progress of the data update. By way of example (but not limited to), the transaction tag may be coded by a first byte representing a tag value (e.g. "AB") following by two bytes representing the progress of the data update. For instance, as used in the example of Figures 3a-3g, the transaction tag may have three possible values:
- a first value (e.g. ABFFFF) indicating that a transaction has started, but no data has yet been updated (what can happen for example if a power cut occurs before starting to update the data);
- a second value (e.g. ABFFA5) indicating that data update has started (i.e. some data has been updated, others still need to be updated); and
- a third value (e.g. ABA5A5) indicating that the data update is completely performed (and the transaction may be committed).

In these embodiments, just after starting the transaction (at step 200), the transaction tag may be set to the first value at an optional step 205.

Of course, other embodiments are possible. For example, the transaction tag may have only two values indicating either that the data update has started or that the data update is complete.

Then, data of the NVM 103 may be updated at step 210. In one or several embodiments, the data update 210 of NVM 103 may comprise:
- first, copying the current (initial) OTP value of the OTP memory 102 in the NVM 103 (step 211). This copy may be used in case of power cut, for restoring data of the NVM 103;
- then, (optionally) setting the transaction tag to the second value (step 212). It is noted that, according to embodiments, step 212 may be performed after step 213; and
- updating data of the NVM 103 (step 213). The data to update may include objects stored in the NVM 103, and the identifiers of the (new) versions of these updated objects in the tables of the NVM 103. The data to update may also comprise the NVM content values of all the tables stored in the NVM 103. If all data are correctly updated, the NVM content values must be the same for all the tables, and must correspond to a new global version identifier of the updated content of the NVM 103. The new NVM content value (i.e. the common value of the NVM content values for all the tables) therefore correspond to a projection of the OTP value once the OTP 102 will be updated.

Once data of the NVM 103 are updated, the OTP 102 may be updated at a step 220. In one or several embodiments, updating (step 220) data of the OTP 102 may involve the following steps:
- setting the OTP flag of the NVM 103 to a first value (step 221). When the OTP flag is set to the first value, it therefore indicates that data of the NVM 103 (including all the NVM content values of the tables of the NVM 103) has already been updated, but data of the OTP memory 102 has not;
- then, updating the OTP value in the OTP memory 102 (step 222). This is usually performed by burning one or more bits of the OTP memory 102;
- once the OTP value of the OTP memory 102 is updated, setting the OTP flag of the NVM 103 to a second value (step 223), to indicate that both the NVM 103 and the OTP memory 102 are updated (i.e. the two memories 102, 103 are synchronized);
- then, optionally setting the transaction tag to the third value (step 224), to indicate that update is complete.

The transaction may then be committed (step 230).

Figures 3a-3g represent steps of a method for updating data in one or several embodiments of the invention.

In the example of Figures 3a-3g, the NVM 103 stores three objects (noted Object 1, Object 2 and Object 3, each of them respectively associated with an own version v1, v2, v1) and two tables (noted "ARBT 1" and "ARBT 2", ARBT standing for "Anti Rollback Table"). The first table ARTB 1 is associated with two objects O₁ and O₂, and contains the current version of these objects (at the initial state of Figure 3a, v1 for O₁ and v2 for O₂). The second table ARTB 2 is associated with one object O₃, and contains the current version of this object (at the initial state of Figure 3a, v1 for O₃). The NVM 103 also comprises the OTP flag. At the initial state of Figure 3a (i.e. before any data update), the OTP flag may be set to the second value mentioned above, which is the default value indicating that the two memories 102, 103 are synchronized. In the example of Figure 3a, this default value is equal to 0xFF. Also, at the initial state of Figure 3a, the OTP value of the OTP memory 102 is equal for example to vl2. As represented in Figure 3a, each of the tables ARBT 1 and ARBT 2 further stores the NVM content value (noted "CV" and initially equal to "vl2"), which initially matches with the OTP value since the two memories are supposed to be synchronized at the initial state. The NVM 103 also comprises a transaction tag as previously described (noted "Trans.Tag") not initialized yet.

Figure 3b represents data of the memories 102, 103 right after starting a transaction (more specifically, this figure represents steps 205 and 211 of Figure 2). The transaction tag may be set to a first value (ABFFFF in the figure), which corresponds to step 205 of Figure 2, indicating that data has to be update but the update has not started yet. Also, the initial OTP value of OTP memory 102 may be copied into the NVM 103 (as in step 211 of Figure 2).

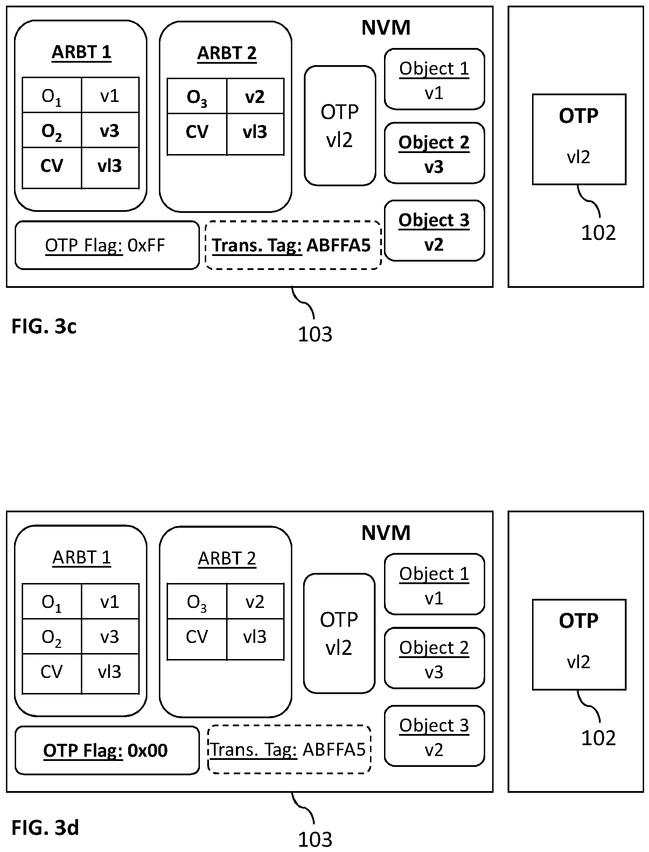

Then, as represented in Figure 3c, objects (all or part only, depending on the transaction) are updated (respective data of the object and respective identifier of their (new) versions), together with the respective identifiers of their (new) versions in the tables ARBT 1 and ARBT 2 (for instance, in figure 3c, only object O₂ and object O₃ are updated). The NVM content value is also updated (in the figure, it is set to vl3, which represents the expected OTP value after OTP memory update). This corresponds to step 213 of Figure 2. The transaction tag may be set to a second value (in the figure, ABFFA5), as in step 212 of Figure 2, to indicate that the data update has started but is not complete.

In Figure 3d, the OTP flag is then set to the first value (0x00 in the represented example) to indicates that the two memories are not synchronized (data of NVM 103 is updated but not data of OTP memory 102). This corresponds to step 221 of Figure 2.

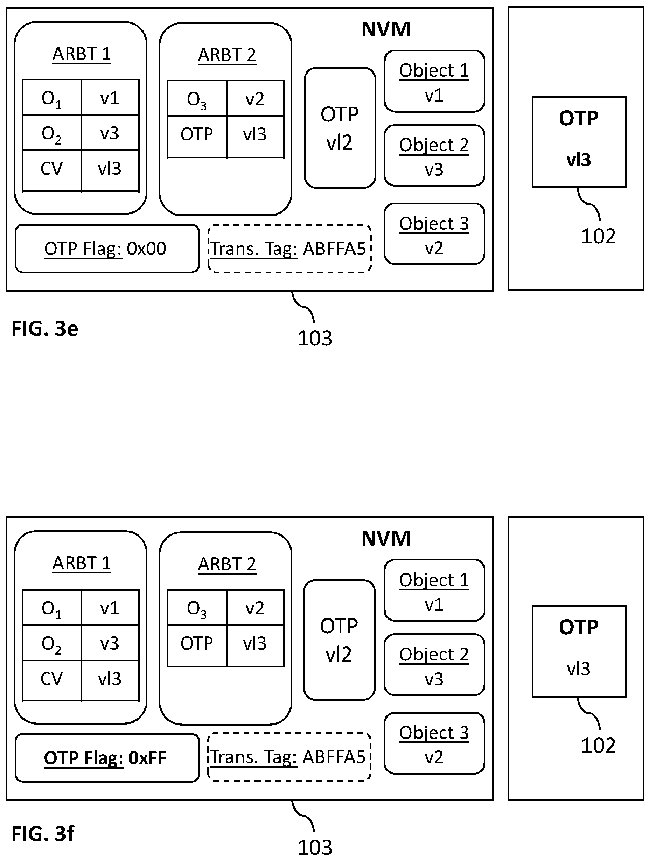

Then, in Figure 3e, the OTP value of the OTP memory 102 is updated (into "vl3" in Figure 3e, which is related to the expected value of the identifier already stored in the tables of the NVM 103). This corresponds to step 222 of Figure 2.

In Figure 3f, the OTP flag is set to the default value (0xFF in the figure), to indicate that both memories have been updated. This corresponds to step 223 of Figure 2.

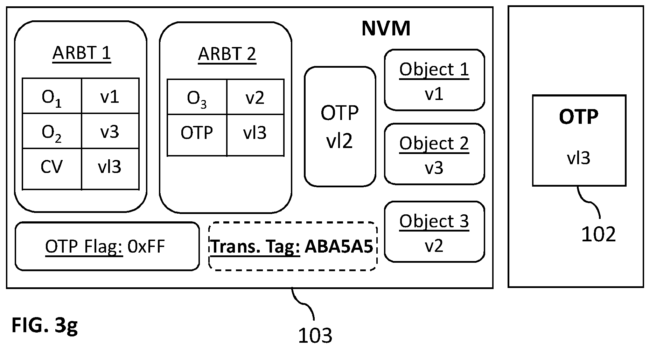

In Figure 3g, the transaction tag is set to a third value (ABA5A5 in the figure), indicating that the data update is complete (step 224 of Figure 2).

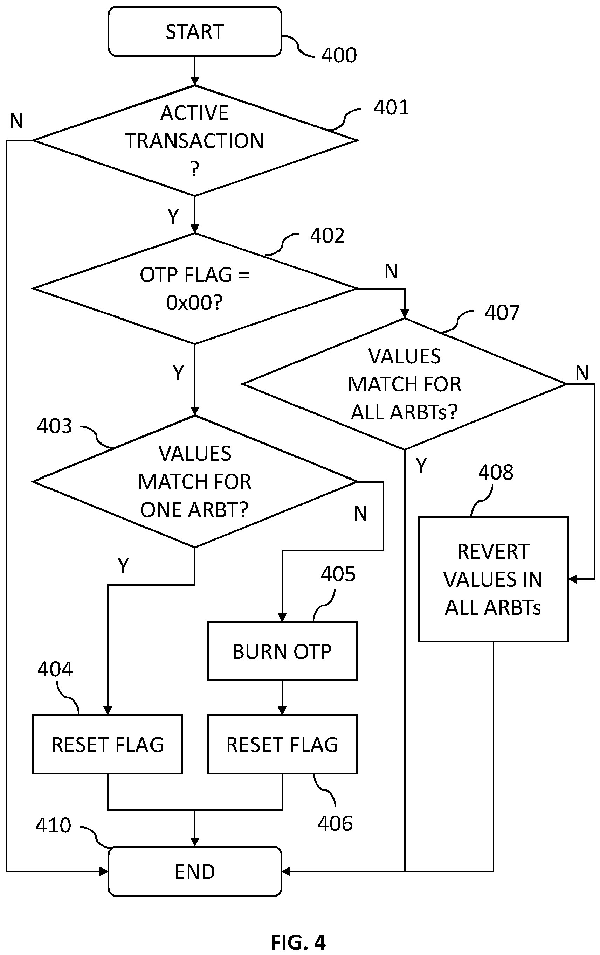

Figure 4 is a flow chart describing a data restoration in one or several embodiments of the invention. Part of this flow chart can represent steps of an example of a computer program which may be executed, for instance, by the CPU (101) of Figure 1a, or the CPU2 (101) of Figure 1b.

The method described in Figure 4 may be implemented when the updating of the data could not be completed, for example because of a power cut (problem of tearing). Therefore, the method may be started (step 400) after a power cut.

During a step 401, it is checked whether there is an uncompleted (or "active") transaction. This may be performed, for instance, by looking at the transaction tag: in the example above, if the transaction tag is equal to ABFFA5, it means that a transaction has started (i.e. at least part of the data has been modified) but has not been marked as completed. In other words, it means that the update method of Figure 2 stopped between step 213 and step 223.

If there is no active transaction (arrow "N" of step 401), the restoration method ends (step 410).

If there is an active transaction (arrow "Y" of step 401), a test is performed on the value of the OTP flag of the NVM 103 (step 402). In case of the examples of Figure 2 and Figures 3a-3g, it is checked whether the OTP flag is set to the first value (0x00) or to the second value (i.e. the default value, 0xFF in the example above).

If the OTP flag is set to the first value (arrow "Y" for step 402), it indicates that the update method of Figure 2 stopped after step 221. However, it is not possible to know, from this information alone, whether steps 222, 223 and 224 have been performed. Therefore, in that case, another test (step 403) is carried out to check if, for one table of the NVM 103, the NVM content value stored in this table corresponds to the OTP value of the OTP memory 102. It is noted that test 403 only needs to be performed on a single table among all the tables. The table on which the test 403 is performed may be, for instance, randomly chosen.

If the values correspond (arrow "Y" of test 403), it means that the OTP memory 102 has already been updated (i.e. step 222 has been performed). Therefore, it is only necessary to set the OTP flag to the second value (step 404) and to indicate that the transaction is committed, i.e. to carry out steps 223, 224, 230 of Figure 2. The restoration method stops here (step 410).

If the values do not correspond (arrow "N" of test 403), that means that the update method of Figure 2 stopped before step 222, i.e. that the OTP memory 102 has not been updated. In that case, the OTP memory 102 may be updated (step 405) based on the current NVM content value set in the table, the OTP flag may be set to the second value (step 406) and the transaction may be marked as being committed. This actually amounts carrying out steps 222 to 224 and 230 of Figure 2. The restoration method then stops (step 410).

If the OTP flag is set to the second value (arrow "N" for step 402), it indicates that the update method of Figure 2 stopped before step 221. However, it is not possible to know, from this information alone, whether step 213 has been performed (partially or completely). Therefore, in that case, another test (step 407) is carried out to determine if, for all the tables of the NVM 103, the NVM content values stored in these table correspond to the OTP value of the OTP memory 102. It is noted that test 407 is performed on each table of the NVM 103.

If, for each table among the tables stored in the NVM 103, the respective NVM content value corresponds to the OTP value of the OTP memory 102 (arrow "Y" of test 407), it means that the update method stopped before starting step 213. In other words, no data has been updated, and the active transaction may be simply deleted or started over. The restoration method of Figure 4 then ends (step 410).

If, for at least one table among the tables stored in the NVM 103, the NVM content value does not correspond to the OTP value of the OTP memory 102 (arrow "N" of test 407), it means that the update method of Figure 2 stopped during step 213. In other words some data has been updated, and some not. In that case, the content of the NVM 103 is modified (in particular, each of the NVM content values of all ARBT tables is updated based on the OTP value of the OTP memory) to correspond to its content before any update, that is to say to the data of the NVM 103 before starting step 213 of Figure 2 (step 408). This can be performed, for instance, based on the copy of the OTP value stored in NVM 103 at step 211 of Figure 2. The active transaction may then be deleted or started over, and the restoration method of Figure 4 may then end (step 410).

It is noted that step 408 may be carried out as soon as the NVM content value of one table is found to mismatch with the OTP value of the OTP memory 102. There is no need to test all the tables.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

A person skilled in the art will readily appreciate that various parameters disclosed in the description may be modified and that various embodiments disclosed may be combined without departing from the scope of the invention.

## Claims

1. A computing device (100) comprising a non-volatile memory, referred to as first memory (102), and another memory referred to as second memory (103), the first memory (102) storing a reference value relating to a content of the second memory (103), the second memory (103) storing a current content identifier representative of current data of the second memory (103), the computing device (100) further comprising a processing unit configured for updating (213) data of the second memory (103) and/or for updating (222) the reference value of the first memory (102), wherein said data of the second memory (103) comprises the current content identifier, the second memory (103) further comprising an update flag indicating whether the data of the second memory (103) has been updated and/or the reference value of the first memory (102) has been updated;
wherein the processing unit is further configured for setting (221, 223) the update flag of the second memory (103) to a first flag value or to a second flag value, wherein the first flag value indicates that the data of the second memory (103) has been updated (213), and the second flag value indicates that the reference value of the first memory (102) has been updated (222).

2. The computing device (100) of claim 1, wherein the current content identifier of the second memory (103) corresponds to a previous version, a current version or an updated version of the reference value of the first memory (102).

3. The computing device (100) of claims 1 or 2, said computing device comprising a system on a chip, SOC (108), wherein the first memory (102) is internal to the SOC and the second memory (103) is a non-volatile memory external to the SOC.

4. The computing device (100) of any one of claims 1 to 3, wherein the first memory (102) is a One Time Programmable, OTP, memory.

5. The computing device (100) of any one of claims 1 to 4, wherein the processing unit is configured for performing, in that order:
updating (213) the data of the second memory (103), including updating the current content identifier;
setting (221) the update flag to the first flag value;
updating (222) the reference value stored in the first memory (102); and
setting (223) the update flag to the second flag value.

6. The computing device (100) of any one of claims 1 to 4, wherein the processing unit is configured for, upon determining (401) that a data update is not complete:
determining (402, 403, 407), based on the value of the update flag, whether data of the second memory (103) has been updated and whether the reference value of the first memory (102) has been updated;
upon said determining, performing one of:
keeping (404) the updated data of the second memory (103) and the updated reference value of the first memory (102),
updating (408) the data of the second memory (103) according to the reference value of the first memory (102), and
updating (405) the reference value of the first memory (102) according to the updated data of the second memory (103).

7. A method for updating data, the method being performed by a processing unit of a computing device (100), the computing device comprising a non-volatile memory, referred to as first memory (102), and another memory referred to as second memory (103), the first memory (102) storing a reference value relating to a content of the second memory (103), the second memory (103) storing a current content identifier representative of current data of the second memory (103), the second memory (103) further comprising an update flag indicating whether data of the second memory (103) has been updated and/or the reference value of the first memory (102) has been updated;
the method comprising:
updating (213) the data of the second memory (103) and/or updating (222) the reference value of the first memory (102), wherein said data of the second memory (103) comprises the current content identifier; and
setting (221, 223) the update flag of the second memory (103) to a first flag value or to a second flag value, wherein the first flag value indicates that the data of the second memory (103) has been updated, and the second flag value indicates that the reference value of the first memory (102) has been updated.

8. The method of claim 7 comprising performing, in that order:
updating (213) data of the second memory (103), including updating the current content identifier;
setting (221) the update flag to the first flag value;
updating (222) the reference value stored in the first memory (102); and
setting (223) the update flag to the second flag value.

9. The method of claims 7 or 8, wherein the data of the second memory (103) comprises at least one table and a set of objects comprising at least one subset of objects,
each of the at least one table being associated with one respective subset of objects among the at least one subset of objects and associating each object of said respective subset of objects to a respective version identifier, each of the at least one table further comprising a respective value of the current content identifier;
wherein the updating (213) of the data of the second memory (103) comprises:
- updating an object of the set of objects; and
- for each table of the at least one table, updating the respective value of the current content identifier;
the update flag being set to the first flag value (221) after updating (213) the value of the current content identifier of each of the at least one table.

10. The method of claim 9, wherein the respective value of the current content identifier of each of the at least one table corresponds to a previous version, a current version or an updated version of the reference value of the first memory (102).

11. The method of any one of claims 7 to 10, wherein the updating (213) of the data of the second memory (103) comprises:
updating the version identifier associated with the updated object.

12. The method of any one of claims 7 to 11, further comprising, before the updating of the object:
writing (211), in the second memory (103), a copy of the reference value of the first memory (102).

13. The method of any one of claims 7 to 12, wherein the second memory (103) stores a tag indicating a status of an update of data of the second memory (103), the method further comprising:
setting (205) the tag of the second memory (103) to a first tag value before the updating of the object;
setting (212) the tag of the second memory (103) to a second tag value after the updating of the object; and
setting (224) the tag of the second memory (103) to a third tag value after the setting of the flag to the second flag value.

14. The method of claim 7, comprising, upon determining (401) that a data update is not complete, the data update comprising the updating (213) of the data of the second memory (103) and the updating (222) of the reference value of the first memory (102):
determining (402, 403, 407), based on the value of the update flag, whether the data of the second memory (103) has been updated and whether the reference value of the first memory (102) has been updated;
upon said determining, performing one of:
keeping (404) the updated data of the second memory (103) and the updated reference value of the first memory (102),
updating (408) the data of the second memory (103) according to the reference value of the first memory (102), and
updating (405) the reference value of the first memory (102) according to the updated data of the second memory (103).

15. The method of claim 14, wherein the data of the second memory (103) comprises at least one table and a set of objects comprising at least one subset of objects,
each of the at least one table being associated with one respective subset of objects among the at least one subset of objects and associating each object of said respective subset of objects to a respective identifier, each of the at least one table further comprising a respective value of the current content identifier;
wherein the determining of whether the data of the second memory (103) has been updated and whether the reference value of the first memory (102) has been updated comprises:
if the value of the update flag is equal to the first flag value (402):
comparing (403) the respective value of the current content identifier of one table among the at least one table with the reference value of the first memory (102);
if the value of the current content identifier is equal to the reference value, setting (404) the update flag to the second flag value and indicating that the data update is complete (410);
if the value of the current content identifier is not equal to the reference value, updating (405) the reference value of the first memory (102) with said value of the current content identifier, setting the update flag to the second flag value and indicating that the data update is complete (410);
if the value of the update flag is equal to the second flag value (402):
comparing (407) the respective value of the current content identifier of each table among the at least one table with the reference value of the first memory (102);
if the value of the current content identifier of each table among the at least one table is equal to the reference value, indicating that the data update is complete (410); and
if the value of the current content identifier of one table among the at least one table is not equal to the reference value, modifying (408) a content of the second memory (103), including setting the current content identifier to said value of the reference value, so that this content is the same as before the data update.

16. The method of claim 15, wherein the value of the current content identifier of each of the at least one table respectively corresponds to a previous version, a current version or an updated version of the reference value of the first memory (102).

17. The method of claims 15 or 16, further comprising:
writing (211), in the second memory (103), a copy of the reference value of the first memory (102) before updating the data of the second memory (103) and updating the reference value of the first memory (102);
wherein the modifying (408) of the content of the second memory (103) is based on the copy of the reference value.

18. The method of any one of claims 14 to 17, wherein the determining that the data update is not complete is based on a value of a tag of the second memory (103), said tag indicating a progress of an update of data of the second memory (103).

19. The method of claim 18, wherein the value of the tag is one of a first tag value, a second tag value and a third tag value, wherein the first tag value indicates that a data update has not started, the second tag value indicates that the data update has started but is not completed, and the third tag value indicates that the data update is completed.

20. A non-transitory computer readable storage medium, having stored thereon a computer program comprising program instructions, the computer program being loadable into a data-processing unit and adapted to cause the data-processing unit to carry out the steps of any of claims 7 to 19 when the computer program is run by the data-processing device.
